**Europäisches Patentamt**

**European Patent Office**

**Office européen des brevets**

(19)

(11) Veröffentlichungsnummer : **0 447 514 B1**

(12)

# EUROPÄISCHE PATENTSCHRIFT

(45) Veröffentlichungstag der Patentschrift :
22.09.93 Patentblatt 93/38

(51) Int. Cl.$^5$ : **G01K 7/20, G01K 1/02**

(21) Anmeldenummer : **90914502.1**

(22) Anmeldetag : **05.10.90**

(86) Internationale Anmeldenummer :
**PCT/DE90/00762**

(87) Internationale Veröffentlichungsnummer :
**WO 91/05229 18.04.91 Gazette 91/09**

(54) **TEMPERATURMESSSCHALTUNG.**

(30) Priorität : **05.10.89 DE 3933311**

(43) Veröffentlichungstag der Anmeldung :
**25.09.91 Patentblatt 91/39**

(45) Bekanntmachung des Hinweises auf die
Patenterteilung :
**22.09.93 Patentblatt 93/38**

(84) Benannte Vertragsstaaten :
**CH DE FR GB IT LI SE**

(56) Entgegenhaltungen :
**EP-A- 0 187 317**
**DE-A- 2 526 027**
**DE-A- 3 200 353**

(73) Patentinhaber : **Endress u. Hauser GmbH u.
Co.
Hauptstrasse 1
D-79689 Maulburg (DE)**

(72) Erfinder : **KRÜGER, Jürgen
Alemannenweg 18
D-7850 Lörrach (DE)**
Erfinder : **TETARD, Jürgen
Hüsinger Strasse 26
D-7850 Lörrach (DE)**
Erfinder : **FUNKEN, Dieter
Tumringer Strasse 262
D-7850 Lörrach (DE)**

(74) Vertreter : **Leiser, Gottfried, Dipl.-Ing. et al
Prinz & Partner, Manzingerweg 7
D-81241 München (DE)**

EP 0 447 514 B1

Jouve, 18, rue Saint-Denis, 75001 PARIS

## Beschreibung

Die Erfindung betrifft eine Temperaturmeßschaltung mit mehreren Temperatursensoren, von denen jeder durch einen temperaturabhängigen Meßwiderstand mit zwei Stromanschlußklemmen und mit zwei jeweils zwischen einer zugeordneten Stromanschlußklemme und dem temperaturabhängigen Meßwiderstand angeordneten Spannungsabgriffklemme gebildet ist, und mit einer Auswerteschaltung, die über die Stromanschlußklemmen einen konstanten Strom durch jeden Temperatursensor schickt und den von dem konstanten Strom verursachten Spannungsabfall zwischen zwei mit den Spannungsabgriffklemmen verbundenen Spannungsleitern mißt.

Bei Temperaturmeßschaltungen dieser Art beruht die Temperaturmessung auf der Messung des Widerstandswertes des temperaturabhängigen Meßwiderstands, wobei die Widerstandsmessung durch Strom-Spannungs-Messung in Vierleiterschaltung erfolgt. Die Anwendung der Vierleitertechnik ergibt eine höhere Meßgenauigkeit, weil Spannungsabfälle, die der durch den Meßwiderstand fließende Strom an Zuleitungs- und Übergangswiderständen verursacht, nicht in das Meßergebnis eingehen. Als Nachteil ist anzusehen, daß jeder Temperatursensor durch vier Leiter mit der Auswerteschaltung verbunden ist, so daß bei einer größeren Anzahl von Temperatursensoren, wie sie zur Erfassung verschiedener Temperaturen an verschiedenen Stellen in technischen Anlagen oder Prozessen oft erforderlich sind, die Anzahl der benötigten Verbindungsleiter proportional zur Anzahl der Temperatursensoren ansteigt und oft unerwünscht groß wird.

EP-A-0 187 317 beschreibt eine Variante einer Meßanordnung bei welcher Widerstandsmeßwertgeber under sich und mit einer Konstantstromquelle in Reihe geschaltet sind.

Aufgabe der Erfindung ist die Schaffung einer Temperaturmeßschaltung der eingangs angegebenen Art, die bei völliger Beibehaltung der Vorteile der Vierleitertechnik eine wesentlich geringere Anzahl von Verbindungsleitern zwischen den Temperatursensoren und der Auswerteschaltung erfordert.

Die Aufgabe der Erfindung wird mittels der Merkmale des Anspruchs 1 gelöst.

Bei der Temperaturmeßschaltung nach der Erfindung werden infolge der Reihenschaltung der Temperatursensoren, unabhängig von deren Anzahl, nur zwei Stromleiter für die Verbindung mit der Stromquelle benötigt, und die Anzahl der benötigten Spannungsleiter ist dadurch verringert, daß jeweils zwei Spannungsabgriffklemmen, die zu zwei in der Reihenschaltung aufeinanderfolgenden Temperatursensoren gehören, mit einem gemeinsamen Spannungsleiter anstatt mit zwei getrennten Spannungsleitern verbunden sind. Die Anzahl der insgesamt benötigten Verbindungsleiter ist daher nur um drei größer als die Anzahl der Temperatursensoren, gegenüber dem Vierfachen der Anzahl der Temperatursensoren bei herkömmlichen Temperaturmeßschaltungen. Demzufolge ist die Einsparung an Verbindungsleitern um so größer, je mehr Temperatursensoren vorhanden sind. Dadurch, daß jeder gemeinsame Spannungsleiter mit den beiden zugeordneten Spannungsabgriffklemmen nicht direkt, sondern über Widerstände verbunden ist, ist sichergestellt, daß die Spannungsmessung praktisch mit der gleichen Genauigkeit erfolgt wie nach der herkömmlichen Vierleitertechnik mit getrennten Spannungsleitern.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigen:

Fig. 1     das Prinzipschema der Temperaturmessung mit einem in Vierleiterschaltung betriebenen Widerstands-Temperatursensor nach dem Stand der Technik und

Fig. 2     eine nach der Erfindung ausgeführte Temperaturmeßschaltung mit drei Widerstands-Temperatursensoren.

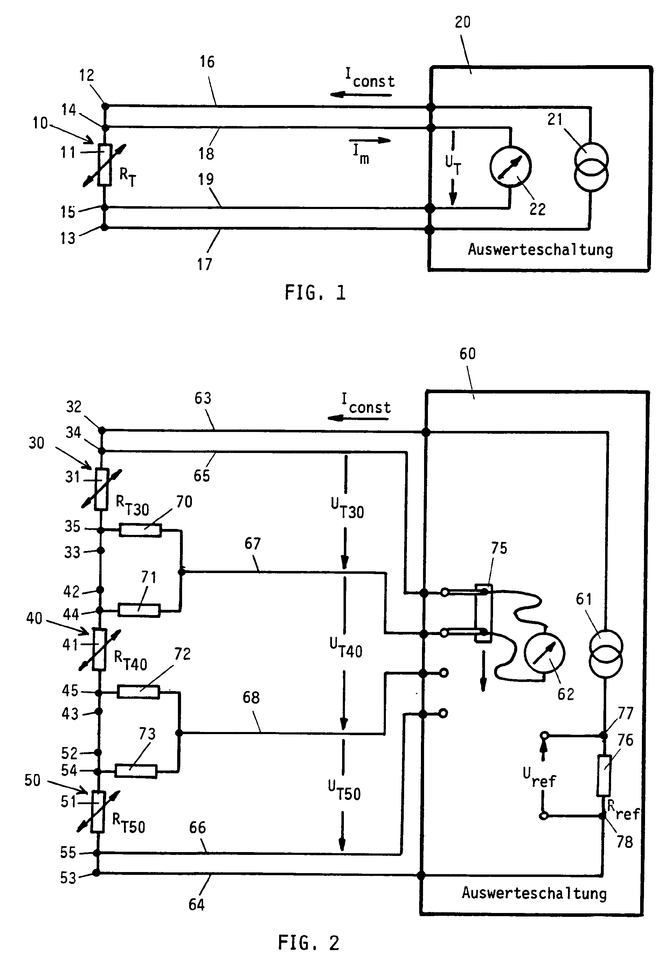

Fig. 1 zeigt schematisch das Prinzip der Temperaturmessung mittels eines in Vierleiterschaltung betriebenen Widerstands-Temperatursensors 10. Der Temperatursensor 10 enthält einen temperaturabhängigen Meßwiderstand 11 mit dem Widerstandswert $R_T$. Am Meßwiderstand 11 sind vier Klemmen angebracht, nämlich zwei Stromanschlußklemmen 12, 13 und zwei Spannungsabgriffklemmen 14, 15, wobei die Spannungsabgriffklemme 14 elektrisch zwischen der Stromanschlußklemme 12 und dem Meßwiderstand 11 und die Spannungsabgriffklemme 15 elektrisch zwischen der Stromanschlußklemme 13 und dem Widerstand 11 liegt. Widerstands-Temperatursensoren dieser Art sind allgemein bekannt und im Handel erhältlich. Weit verbreitet sind Platin-Widerstands-Temperatursensoren des Typs PT 100, die einen Widerstand von 100 $\Omega$ bei 0°C haben.

Die vier Klemmen 12, 13, 14 und 15 sind über vier Leiter 16, 17, 18 bzw. 19 mit einer Auswerteschaltung 20 verbunden. Die Auswerteschaltung 20 enthält eine Stromquelle 21, die über die Leiter 16 und 17 mit den beiden Stromanschlußklemmen 12 bzw. 13 verbunden ist. Sie erzeugt einen konstanten Strom $I_{const}$, der über den Leiter 16 durch den Meßwiderstand 11 fließt und über den Leiter 17 zur Stromquelle 21 zurückkehrt. Die Leiter 16 und 17 werden deshalb als Stromleiter bezeichnet.

Die Auswerteschaltung 20 enthält ferner eine Spannungsmeßeinrichtung 22, die über die Leiter 18 und

EP 0 447 514 B1

19 mit den beiden Spannungsabgriffklemmen 14 und 15 verbunden ist. Die Spannungsmeßeinrichtung 22, die symbolisch als Spannungsmesser dargestellt ist, mißt die Spannung $U_T$ zwischen den beiden Leitern 18 und 19, die als Spannungsleiter bezeichnet werden.

In der Auswerteschaltung 20 wird der temperaturabhängige Widerstandswert $R_T$ des Meßwiderstands 11 als Quotient aus dem bekannten Strom $I_{const}$ und der gemessenen Spannung $U_T$ berechnet:

$$R_T = \frac{U_T}{I_{const}} \quad (1)$$

Aus dem Widerstand $R_T$ läßt sich dann die vom Temperatursensor 10 erfaßte Temperatur ermitteln.

Die Widerstandsmessung erfolgt also durch Strom-Spannungs-Messung, und die Anwendung der Vierleitertechnik ergibt eine höhere Meßgenauigkeit. Würde man nämlich in der Auswerteschaltung 20 die Spannung zwischen den beiden Stromleitern 16 und 17 messen, dann könnten zwar die beiden Spannungsleiter 18 und 19 entfallen, doch wäre die gemessene Spannung nicht genau gleich der Spannung am Meßwiderstand 11, sondern sie wäre um die Spannungsabfälle, die der Strom $I_{const}$ an den Zuleitungs- und Übergangswiderständen verursacht, größer. Bei Anwendung der Vierleitertechnik sind dagegen die vom Strom $I_{const}$ verursachten Spannungsabfälle an Zuleitungs- und Übergangswiderständen ohne Einfluß auf das Meßergebnis. Der über die Spannungsleiter 18, 19 fließende Meßstrom $I_m$ ist vernachlässigbar, wenn der Innenwiderstand der Spannungsmeßeinrichtung 22 groß gegen den Widerstand $R_T$ des Meßwiderstands 11 ist, was stets der Fall ist. Daher können sowohl die vom Meßstrom $I_m$ verursachten Spannungsabfälle an Zuleitungs- und Übergangswiderständen als auch die durch den Meßstrom $I_m$ bedingte Verringerung des über den Meßwiderstand 11 fließenden Stroms vernachlässigt werden.

In technischen Anlagen und Prozessen ist es oft erforderlich, Temperaturen an verschiedenen Stellen mittels einer gemeinsamen Auswerteschaltung zu erfassen. An jeder Erfassungsstelle muß dann ein Temperatursensor angeordnet und durch die erforderlichen Leiter mit der gemeinsamen Auswerteschaltung verbunden werden. Bei Verwendung von Widerstands-Temperatursensoren der zuvor geschilderten Art, die in Vierleiterschaltung betrieben werden, sind dann für jeden Temperatursensor vier Leiter erforderlich, die zur Auswerteschaltung führen. Bei n Temperatursensoren sind also 4n Verbindungsleiter erforderlich.

In Fig. 2 ist eine Temperaturmeßschaltung mit mehreren Widerstands-Temperatursensoren der geschilderten Art und einer gemeinsamen Auswerteschaltung dargestellt, bei der die Anzahl der erforderlichen Verbindungsleiter wesentlich verringert ist.

Als Beispiel sind drei Widerstands-Temperatursensoren 30, 40 und 50 dargestellt. Der Temperatursensor 30 enthält einen temperaturabhängigen Meßwiderstand 31 des Widerstandwerts $R_{T30}$ mit zwei Stromanschlußklemmen 32, 33 und zwei Spannungsabgriffklemmen 34, 35. In entsprechender Weise enthält der Temperatursensor 40 einen temperaturabhängigen Meßwiderstand 41 des Widerstandswerts $R_{T40}$ mit zwei Stromanschlußklemmen 42, 43 und zwei Spannungsabgriffklemmen 44, 45, und der Temperatursensor 50 enthält einen temperaturabhängigen Meßwiderstand 51 des Widerstandswerts $R_{T50}$ mit zwei Stromanschlußklemmen 52, 53 und zwei Spannungsabgriffklemmen 54, 55.

Die Auswerteschaltung 60 enthält wieder eine Stromquelle 61, die einen konstanten Strom $I_{const}$ liefert, und eine Spannungsmeßeinrichtung 62.

Die Temperatursensoren 30, 40 und 50 sind über ihre Stromanschlußklemmen in Reihe geschaltet. Hierzu ist die Stromanschlußklemme 33 des Temperatursensors 30 mit der Stromanschlußklemme 42 des Temperatursensors 40 verbunden, und die Stromanschlußklemme 43 des Temperatursensors 40 ist mit der Stromanschlußklemme 52 des Temperatursensors 50 verbunden. Die so gebildete Reihenschaltung der drei Temperatursensoren ist über zwei Stromleiter 63 und 64, die an die freien Stromanschlußklemmen 32 bzw. 53 der Temperatursensoren 30 bzw. 50 angeschlossen sind, mit der Stromquelle 61 in der Auswerteschaltung 60 verbunden. Die ganze Anordnung benötigt also, unabhängig von der Anzahl der Temperatursensoren, nur zwei Stromleiter, und alle Meßwiderstände 31, 41 und 51 werden von dem gleichen Strom $I_{const}$ in Reihe durchflossen.

Die äußere Spannungsabgriffklemme 34 des Temperatursensors 30 ist über einen eigenen Spannungsleiter 65 mit der Auswerteschaltung 60 verbunden, und in entsprechender Weise ist die äußere Spannungsabgriffklemme 55 des Temperatursensors 50 über einen eigenen Spannungsleiter 66 mit der Auswerteschaltung 60 verbunden. Dagegen sind die beiden Spannungsabgriffklemmen 35 und 44, die den miteinander verbundenen Stromanschlußklemmen 33 und 42 der Temperatursensoren 30 und 40 zugeordnet sind, über einen gemeinsamen Spannungsleiter 67 mit der Auswerteschaltung 60 verbunden, und in entsprechender Weise sind die beiden Spannungsklemmen 45 und 52, die den miteinander verbunden Stromanschlußklemmen der Temperatursensoren 40 und 50 zugeordnet sind, über einen gemeinsamen Spannungsleiter 68 mit der Auswerteschaltung 60 verbunden.

Die beiden Spannungsabgriffklemmen 35 und 44 sind mit dem gemeinsamen Spannungsleiter 67 nicht

3

direkt, sondern jeweils über einen Widerstand 70 bzw. 71 verbunden. In entsprechender Weise sind die beiden Spannungsabgriffklemmen 45 und 54 mit dem gemeinsamen Spannungsleiter 68 nicht direkt, sondern jeweils über einen Widerstand 72 bzw. 73 verbunden.

Damit die Spannungsabfälle an den Meßwiderständen 31, 41, 51 der Temperatursensoren 30, 40, 50 von der Spannungsmeßeinrichtung 62 getrennt gemessen werden können, ist in der Auswerteschaltung 60 eine Umschaltvorrichtung 75 enthalten, durch die die Spannungsmeßeinrichtung 62 wahlweise jeweils mit einem Paar der Spannungsleiter 65, 66, 67, 68 verbunden werden kann. Zur Veranschaulichung ist die Umschaltvorrichtung 75 durch mechanisch verstellbare Schaltkontakte dargestellt, doch ist sie in Wirklichkeit natürlich aus elektronischen Schaltgliedern gebildet, vorzugsweise in Form einer im Handel erhältlichen integrierten Schaltung. Hierfür ist beispielsweise der Vierkanal-Analog-Multiplexer/Demultiplexer des Typs CD 4052 geeignet. In der in der Zeichnung dargestellten Stellung verbindet die Umschaltvorrichtung 75 die Spannungsmeßeinrichtung 62 mit den beiden Spannungsleitern 65 und 67, so daß die Spannung $U_{T30}$ zwischen diesen beiden Leitern gemessen wird. Wenn die Schaltkontakte der Umschaltvorrichtung 75 um einen Schritt verschoben werden, wird die Spannungsmeßeinrichtung 62 mit den beiden Spannungsleitern 67 und 68 verbunden, so daß sie die Spannung $U_{T40}$ zwischen diesen beiden Leitern mißt, und wenn die Schaltkontakte nochmals um einen Schritt verschoben werden, wird die Spannung $U_{T50}$ zwischen den beiden Spannungsleitern 68 und 66 gemessen.

Durch die Widerstände 70 bis 73 wird erreicht, daß die gemessenen Spannungen $U_{T30}$, $U_{T40}$, $U_{T50}$ mit großer Genauigkeit den Spannungsabfällen zwischen den Spannungsabgriffklemmen der Temperatursensoren 30, 40 bzw. 50 entsprechen. Wenn beispielsweise die Widerstände 70 und 71 nicht vorgesehen wären und statt dessen die Spannungsabgriffklemmen 35 und 44 unmittelbar mit dem gemeinsamen Spannungsleiter 67 verbunden wären, bestünde eine direkte Verbindung zwischen den Spannungsabgriffklemmen 35 und 44 im Nebenschluß zu der Verbindung zwischen den Stromanschlußklemmen 33 und 42. Der Strom $I_{const}$ würde sich dann zu etwa gleichen Teilen auf die beiden parallelen Verbindungen aufteilen, und der über den Nebenschluß fließende Stromanteil würde Spannungsabfälle an Übergangswiderständen verursachen, die einen nicht vernachlässigbaren Unterschied zwischen der gemessenen Spannung und dem tatsächlichen Spannungsabfall am Meßwiderstand ergeben würden.

Bei der dargestellten Schaltung liegt dagegen die Reihenschaltung aus den Widerständen 70 und 71 im Nebenschluß zu der Verbindung zwischen den Stromanschlußklemmen 33 und 42. Der über diese Reihenschaltung fließende Stromanteil ist so klein, daß die von ihm verursachten Spannungsabfälle an Übergangswiderständen vernachlässigbar sind, vorausgesetzt, daß die Widerstandswerte der Widerstände 70 und 71 groß gegen den Gesamtwiderstand des über die Stromanschlußklemmen 33 und 42 gehenden Strompfades sind. Andererseits müssen die Widerstandswerte der Widerstände 70 und 71 klein gegen den Innenwiderstand der Spannungsmeßeinrichtung 62 sein, damit der Spannungsabfall, den der über den Spannungsleiter 67 fließende Meßstrom an jedem dieser Widerstände verursacht, gegenüber der gemessenen Spannung vernachlässigt werden kann.

Die vorstehenden Betrachtungen gelten natürlich in gleicher Weise für die Verbindung zwischen den Temperatursensoren 40 und 50 und für die Bemessung der Widerstände 72 und 73.

Die beiden zuvor genannten Bedingungen für die Bemessung der Widerstände 70 bis 73 lassen sich leicht erfüllen, denn der Gesamtwiderstand des über die Stromanschlußklemmen 33, 42 gehenden Strompfads liegt im Bereich von Bruchteilen eines Ohm, und der Innenwiderstand der Spannungsmeßeinrichtung 62 liegt im Megohmbereich. Die Meßgenauigkeit wird daher nicht beeinträchtigt, wenn der Widerstandswert jedes der Widerstände 70 bis 73 in der Größenordnung von 100 $\Omega$ liegt.

Es ist daher in der Auswerteschaltung 60 möglich, die Widerstandswerte $R_{T30}$, $R_{T40}$ und $R_{T50}$ der Meßwiderstände aus den gemessenen Spannungen $U_{T30}$, $U_{T40}$, $U_{T50}$ nach der obigen Gleichung (1) mit großer Genauigkeit zu ermitteln, vorausgesetzt, daß auch der Strom $I_{const}$ mit entsprechender Genauigkeit bekannt ist.

Die bei der Temperaturmeßschaltung von Fig. 2 angewendete Reihenschaltung der Temperatursensoren bietet jedoch die Möglichkeit einer zusätzlichen Maßnahme, durch die erreicht wird, daß der Strom $I_{const}$ nicht in das Meßergebnis eingeht, so daß die Meßgenauigkeit durch Abweichungen oder Schwankungen des Stroms $I_{const}$ nicht beeinträchtigt wird. Zu diesem Zweck ist in die Stromschleife, über die der Strom $I_{const}$ fließt, ein Referenzwiderstand 76 eingefügt, bei dem es sich um einen hochkonstanten Präzisionswiderstand des Wertes $R_{ref}$ handelt. Der über den Referenzwiderstand 76 fließende Strom $I_{const}$ erzeugt einen Spannungsabfall, der als Referenzspannung $U_{ref}$ zwischen zwei Spannungsabgriffklemmen 77 und 78 abgegriffen werden kann. Die Widerstandswerte $R_{T30}$, $R_{T40}$, $R_{T50}$ der Meßwiderstände 31, 41, 51 ergeben sich dann aus dem Verhältnis der gemessenen Spannungen $U_{T30}$, $U_{T40}$, $U_{T50}$ zur Referenzspannung $U_{ref}$ nach den folgenden Gleichungen:

$$R_{T30} = \frac{U_{T30}}{U_{ref}} \cdot R_{ref} \quad (2)$$

$$R_{T40} = \frac{U_{T40}}{U_{ref}} \cdot R_{ref} \quad (3)$$

$$R_{T50} = \frac{U_{T50}}{U_{ref}} \cdot R_{ref} \quad (4)$$

Die Spannung $U_{ref}$ steht dauernd zur Verfügung. Wenn sie gleichfalls mit Hilfe der Umschalteinrichtung 75 abgefragt wird, muß allerdings sichergestellt sein, daß sich der Strom $I_{const}$ im Zeitintervall zwischen der Abfrage einer der Meßspannungen $U_{T30}$, $U_{T40}$, $U_{T50}$ und der Abfrage der Referenzspannung $U_{ref}$ nicht wesentlich ändert.

Vorzugsweise ist der Widerstandswert $R_{ref}$ des Referenzwiderstands 76 von der gleichen Größenordnung wie die Widerstandswerte der Meßwiderstände, so daß auch die Referenzspannung $U_{ref}$ von der gleichen Größenordnung wie die Meßspannungen ist. Bei dem beschriebenen Beispiel hat also der Referenzwiderstand 76 beispielsweise einen Widerstandswert $R_{ref}$ von 100 Ω.

Das anhand der Temperaturmeßschaltung von Fig. 2 erläuterte Prinzip ist natürlich nicht auf die Reihenschaltung von drei Temperatursensoren beschränkt, sondern läßt sich auf eine beliebige Anzahl von Temperatursensoren erweitern. Gegenüber Temperaturmeßschaltungen, bei denen jeder Temperatursensor über vier eigene Leitungen mit der Auswerteschaltung verbunden ist, ist die Einsparung an Verbindungsleitern um so größer, je größer die Anzahl der in Reihe geschalteten Temperatursensoren ist. Bei n Temperatursensoren werden anstelle von 4n Verbindungsleitern nur n+3 Verbindungsleiter benötigt, also 3·(n-1) Verbindungsleiter eingespart. Bei der in Fig. 2 dargestellten Temperaturmeßschaltung mit n = 3 Temperatursensoren werden anstelle von 4n = 12 Verbindungsleitern nur n+3 = 6 Verbindungsleiter benötigt, so daß sechs Verbindungsleiter eingespart werden. Bei vier Temperatursensoren beträgt die Einsparung neun Verbindungsleiter usw.

Wie zuvor erläutert wurde, haben die beiden Widerstände 70 und 71, über die die beiden Spannungsabgriffklemmen 35 und 44 mit dem gemeinsamen Spannungsleiter 67 verbunden sind, den Zweck, einen direkten Nebenschluß parallel zu der Verbindung über die Stromanschlußklemmen 33 und 42 zu vermeiden. Hierzu ist es nicht unbedingt erforderlich, daß die beiden Widerstände 70 und 71 vorhanden sind; auch wenn einer der beiden Widerstände fortgelassen und durch eine direkte Verbindung ersetzt wird, liegt der andere Widerstand noch im Nebenschluß zu der Verbindung zwischen den Stromanschlußklemmen. Es ist also grundsätzlich möglich, eine der beiden Spannungsklemmen 35 oder 44 direkt mit dem gemeinsamen Spannungsleiter 67 zu verbinden, vorausgesetzt, daß in die Verbindung zwischen der anderen Spannungsklemme und dem gemeinsamen Spannungsleiter ein Widerstand 70 bzw. 71 eingefügt ist. Dies gilt natürlich in entsprechender Weise für die Verbindungen zwischen den beiden Spannungsabgriffklemmen 45, 54 und dem gemeinsamen Spannungsleiter 68, wo ebenfalls einer der beiden Widerstände 72, 73 durch eine direkte Verbindung ersetzt werden kann.

## Patentansprüche

1. Temperaturmeßschaltung mit mehreren Temperatursensoren, von denen jeder durch einen temperaturabhängigen Meßwiderstand mit zwei Stromanschlußklemmen und mit zwei jeweils zwischen einer zugeordneten Stromanschlußklemme und dem temperaturabhängigen Meßwiderstand angeordneten Spannungsabgriffklemmen gebildet ist, und mit einer Auswerteschaltung, die über die Stromanschlußklemmen einen konstanten Strom durch jeden Temperatursensor schickt und den von dem konstanten Strom verursachten Spannungsabfall zwischen zwei mit den Spannungsabgriffklemmen verbundenen Spannungsleitern mißt, wobei dei Temperatursensoren über die Stromanschlußklemmen in Reihe geschlatet sind, **dadurch gekennzeichnet,** daß die beiden Spannungsabgriffklemmen von zwei in der Reihenschaltung aufeinanderfolgenden Temperatursensoren, die zwei miteinander verbundenen Stromanschlußklemmen zugeordnet sind, mit einem gemeinsamen Spannungsleiter verbunden sind, und daß in die Verbindung zwischen wenigstens einer der beiden Spannungsabgriffklemmen und dem gemeinsamen Spannungsleiter ein Widerstand eingefügt ist.

2. Temperaturmeßschaltung nach Anspruch 1, **dadurch gekennzeichnet,** daß ein konstanter Referenzwiderstand bekannter Größe mit den Temperatursensoren in Reihe geschaltet ist, so daß er von dem konstanten Strom durchflossen wird, und daß der von dem konstanten Strom am Referenzwiderstand verursachte Spannungsabfall in der Auswerteschaltung als Referenzspannung zur Ermittlung des Widerstandswertes jedes Meßwiderstands verwendet wird.

3. Temperaturmeßschaltung nach Anspruch 1 oder 2, **dadurch gekennzeichnet,** daß die Auswerteschaltung eine Spannungsmeßeinrichtung und eine Umschaltvorrichtung zur Verbindung der Spannungsmeßeinrichtung mit jeweils zwei mit dem gleichen Temperatursensor verbundenen Spannungsleitem enthält.

## Claims

1. Temperature measuring circuit comprising a plurality of temperature sensors, each of which is formed by a temperature-dependent measuring resistor having two current terminals and two voltage tapping terminals each arranged between an associated current terminal and the temperature-dependent measuring resistor, and an evaluating circuit which via the current terminals sends a constant current through each temperature sensor and measures the voltage drop caused by the constant current between two voltage conductors connected to the voltage tapping terminals, the temperature sensors being connected in series via the current terminals, characterized in that the two voltage tapping terminals of two temperature sensors which follow each other in the series circuit and are associated with two current terminals connected together are connected to a common voltage conductor, and that a resistor is inserted into the connection between at least one of the two voltage tapping terminals and the common voltage conductor.

2. Temperature measuring circuit according to claim 1, characterized in that a constant reference resistor of known magnitude is connected in series with the temperature sensors in such a manner that it is traversed by the constant current and that the voltage drop caused by the constant current across the reference resistor is used in the evaluating circuit as reference voltage for determining the resistance value of each measuring resistor.

3. Temperature measuring circuit according to claim 1 or 2, characterized in that the evaluating circuit includes a voltage measuring means and a switchover means for connecting the voltage measuring means in each case to two voltage connectors connected to the same temperature sensor.


## Revendications

1. Circuit de mesure de température à plusieurs capteurs de température dont chacun est constitué d'une résistance de mesure de température dépendant de la température à deux bornes de raccordement d'intensité et de deux prises de tension disposées chacune entre une borne de raccordement d'intensité adjointe et la résistance de mesure dépendant de la température ainsi que d'un circuit d'analyse qui envoie un courant constant à travers chaque capteur de température par les bornes de raccordement d'intensité et qui mesure la chute de potentiel provoquée par le courant constant entre deux conducteurs de tension raccordés par les prises de tension, les capteurs de température étant montés en série par les bornes de raccordement d'intensité, caractérisé par le fait que les deux prises de tension de deux capteurs successifs du montage en série, qui sont adjoints à deux bornes de raccordement d'intensité reliées entre elles, sont raccordées par un fil de tension commun et qu'une résistance est insérée dans la liaison entre au moins l'une des deux prises de tension et le conducteur de tension commun.

2. Circuit de mesure de température selon la revendication 1, caractérisé par le fait qu'une résistance de référence constante de grandeur connue est montée en série avec les capteurs de température, de sorte qu'elle est traversée par le courant constant et que la chute de potentiel provoquée par le courant constant sur la résistance de référence sert de tension de référence pour déterminer la valeur de résistance de chaque résistance de mesure.

3. Circuit de mesure de température selon les revendications 1 ou 2, caractérisé par le fait que le circuit d'analyse contient un dispositif de mesure de tension et un dispositif de commutation pour relier chaque fois le dispositif de mesure de tension à deux conducteurs de tension reliés au même capteur thermique.

FIG. 1

FIG. 2